Europäisches Patentamt

European Patent Office

Office européen des brevets

(11) Veröffentlichungsnummer: **0 494 441 A1**

# (12) EUROPÄISCHE PATENTANMELDUNG

(21) Anmeldenummer: **91122151.3**

(22) Anmeldetag: **23.12.91**

(51) Int. Cl.5: **B29C 67/20**, C08J 9/00, //B29K69/00

(30) Priorität: **05.01.91 DE 4100201**

(43) Veröffentlichungstag der Anmeldung:
**15.07.92 Patentblatt 92/29**

(84) Benannte Vertragsstaaten:
**DE FR GB IT NL**

(71) Anmelder: **BAYER AG**

**W-5090 Leverkusen 1 Bayerwerk(DE)**

(72) Erfinder: **Woldenberg, Edwin**
**Im Grunde 8**
**W-5090 Leverkusen 1(DE)**
Erfinder: **Kircher, Klaus, Dr.**
**Alfred-Kubin-Strasse 2**
**W-5090 Leverkusen 1(DE)**
Erfinder: **Horn, Klaus, Dr.**
**Bodelschwinghstrasse 12**
**W-4150 Krefeld 1(DE)**
Erfinder: **Piontek, Johann**
**Pfauenstrasse 37**
**W-4047 Dormagen(DE)**
Erfinder: **Köhler, Burkhard, Dr.**
**Mündelheimer Strasse 94**
**W-4150 Krefeld 11(DE)**
Erfinder: **Ebert, Wolfgang, Dr.**
**Doerperhofstrasse 31**
**W-4150 Krefeld 1(DE)**

(54) **Verfahren zum Verschäumen von thermoplastischen Polycarbonaten.**

(57) Gegenstand der vorliegenden Erfindung sind die Verwendung von $Al_2O_3(H_2O)_3$ zum Verschäumen von thermoplastischen, aromatischen Polycarbonaten gegebenenfalls unter Mitverwendung von üblichen Additiven und/oder von anderen Thermoplasten und/oder von Schlagzähmodifikatoren sowie die erfindungsgemäß erhältlichen Polycarbonatschaumstoff-Formkörper.

EP 0 494 441 A1

Gegenstand der vorliegenden Erfindung ist ein Verfahren zum Verschäumen von thermoplastischen, aromatischen Polycarbonaten, das dadurch gekennzeichnet ist, daß man thermoplastische aromatische Polycarbonate mit 0,01 Gew.-% bis 10 Gew.-%, vorzugsweise 0,1 Gew.-% bis 3 Gew.-% an $Al_2O_3(H_2O)_3$ vermischt und entweder bei Temperaturen von 220°C bis 320°C im Extruder ohne Anlegung von Vakuum zu geschäumten Formkörpern extrudiert oder bei Temperaturen von 290°C bis 330°C in Spritzgußmaschinen ohne Anlegung von Vakuum zu geschäumten Formkörpern spritzgießt.

Schaumstoffe aus hochmolekularen Polycarbonaten sind bekannt (Siehe beispielsweise DE-AS 1 031 507). Als Treibmittel sind beispielsweise solche geeignet, die $CO_2$ abspalten oder inerte Gase wie $N_2$ oder $CO_2$.

Es war in der Vergangenheit allgemein bekannt, daß thermoplastische Polycarbonate nur in völlig trockenem Zustand einwandfrei verarbeitbar waren, und daß die Anwesenheit von Feuchtigkeit ab einer gewissen Menge zu Molekulargewichtsabbau und Blasenbildung führt. (Siehe beispielsweise Taschenbuch Bayer-Kunststoffe, 2. Auflage 1959, Seite 177, Plastics Technologie, 10, 1964, Seiten 32-36 und GB-PS 841 652).

Diese Feuchtigkeitsempfindlichkeit der thermoplastischen Polycarbonate ist in gewissen Fällen nicht vorhanden, z.B. wenn die Feuchtigkeit als Wasserschlichte von Glasfasern in das thermoplastische Polycarbonat eingebracht wird, oder wenn die Feuchtigkeit zwecks Entfernung von Lösungsmittelresten aus dem Polycarbonat zugemischt und anschließend über einen Ausdampfextruder wieder zusammen mit den Lösungsmittelresten wieder ausgetrieben wird (Siehe US-PS 3 577 378, US-PS 3 567 813 und EP-A2-0 300 485).

Aufgabe der vorliegenden Erfindung war es nun, die Verfahrensbedingungen für die Einarbeitung des $Al_2O_3(H_2O)_3$ und anschließende Formgebung des mit $Al_2O_3(H_2O)_3$ vermischten Polycarbonats so zu wählen, daß ein kontrollierter Abbau des Polycarbonats eintritt, welcher zugleich die Verschäumung bewirkt, ohne daß die mechanischen und sonstigen Eigenschaften des thermoplastischen Polycarbonats und der daraus erfindungsgemäß erhältlichen Schaumstofformkörper allzusehr leiden. Dies wurde durch die erfindungsgemäßen Verfahrensbedingungen erreicht, ohne daß dies aus dem Stand der Technik ableitbar gewesen wäre.

Die nach dem erfindungsgemäßen Verfahren erhältlichen Polycarbonatschäume haben sehr helle Eigenfarbe, gute Zähigkeit und eine hervorragende Zellstruktur. Der Grad der Verschäumung läßt sich durch Art und Menge der bei der Schaumherstellung üblichen Zusatzstoffe in weiten Bereichen steuern.

Gegenstand der vorliegenden Erfindung ist somit auch die Verwendung von $Al_2O_3(H_2O)_3$ zum Verschäumen von thermoplastischen, aromatischen Polycarbonaten.

Gegenstand der vorliegenden Erfindung sind außerdem die nach dem erfindungsgemäßen Verfahren erhältlichen Polycarbonatschaumstofformkörper.

Thermoplastische aromatische Polycarbonate im Sinne der vorliegenden Erfindung sind Polycarbonate, die nach den üblichen, in der Literatur bekannten Methoden aus Diphenolen und Carbonatspendern hergestellt worden sind (siehe beispielsweise H. Schnell, Chemistry and Physics of Polycarbonates, Interscience Publishers, New York, 1964", US-Patent 3 028 365 und deutsche Offenlegungsschrift 3 832 396 (Le A 26 344)).

Diphenole für solche Polycarbonate können beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen sein.

Bevorzugte Diphenole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Die Diphenole können sowohl allein als auch im Gemisch miteinander verwendet werden, es sind also sowohl Homopolycarbonate als auch Copolycarbonate einbezogen. Die Diphenole sind literaturbekannt oder nach literaturbekannten Verfahren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenolischen Hydroxylgruppen, mitverwendet werdend Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan
und
1,4-Bis-(4',4''-dihydroxytriphenyl)-methyl-benzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel, gelöst vor der Phosgenierung, zugegeben werden.

Geeignete Molekulargewichtsregler sind die bekannten, vorzugsweise Monophenole.

Die aromatischen Polycarbonate gemäß vorliegender Erfindung sollen Gewichtsmittelmolekulargewichte $\overline{M}w$ (ermittelt mittels Gelpermeations-Chromatographie) zwischen 5.000 und 50.000, vorzugsweise zwischen 15.000 und 35.000 haben.

Die Lösungsviskositäten liegen entsprechend zwischen 1,15 und 1,35, gemessen in Dichlormethan (0,5 g/100 ml).

Thermoplastische, aromatische Polycarbonate im Sinne der vorliegenden Erfindung schließen thermoplastische aromatische Polyestercarbonate mit ein, also solche "Polycarbonate", in denen ein Teil, maximal 50 Mol-% an Carbonatstruktureinheiten durch aromatische Dicarboxylatstruktureinheiten in bekannter Weise ersetzt sind.

Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten.

Entsprechendes gilt für die Verzweiger und für die monophenolischen Kettenabbrecher, wobei hier aber auch aromatische Monocarbonsäuren beispielsweise in Form ihrer Säurechloride oder Ester verwendet werden können.

Die Kohlensäure kann entweder via $COCl_2$ oder via Diphenylcarbonat in die Polyestercarbonate eingebaut werden, je nach Wahl des Herstellungsverfahrens, also je nachdem, ob Phasengrenzflächenpolykondensation oder Schmelzumesterung zur Polyestercarbonatherstellung verwendet wird.

Entsprechendes gilt für die aromatischen Dicarbonsäuren; sie werden entweder als aromatische Dicarbonsäuredichloride im Zweiphasengrenzflächenverfahren oder als Dicarbonsäurediester im Schmelzumesterungsverfahren eingesetzt. Entsprechendes gilt, falls als Kettenabbrecher Monocarbonsäuren eingesetzt werden.

Die Herstellung der erfindungsgemäß zu verschäumenden Polyestercarbonate erfolgt nach bekannten Herstellungsverfahren, also wie bereits erwähnt beispielsweise nach dem Phasengrenzflächenverfahren oder nach dem Schmelzumesterungsverfahren.

Die zu verschäumenden Polyestercarbonate können somit sowohl linear als auch in bekannter Weise verzweigt sein.

Die aromatischen Polyestercarbonate gemäß vorliegender Erfindung haben mittlere Gewichtsmittelmolekulargewichte $\overline{M}w$ (ermittelt mittels Gelpermeations-Chromatographie) zwischen 5.000 und 50.000, vorzugsweise zwischen 15.000 und 35.000.

Die Lösungsviskositäten liegen entsprechend zwischen 1,15 und 1,35, gemessen in Dichlormethan (0,5 g/100 ml).

Die molare Menge an Carbonat-Einheiten zu aromatischen Dicarboxylateinheiten in den erfindungsgemäß zu verschäumenden Polyestercarbonaten liegt mindestens bei 50:50, vorzugsweise bei 75:25 und insbesondere bei 90:10. Mit anderen Worten, bei den erfindungsgemß zu verschäumenden Polyestercarbonaten liegt das Übergewicht bei den Carbonatstruktureinheiten, als der $CO_2$-Resource.

Das erfindungsgemäß einzusetzende $Al_2O_3$-$(H_2O)_3$ ist als solches literaturbekannt.

Das erfindungsgemäße Verschäumungsverfahren kann noch unter Zusatz von für die Schaumherstellung üblichen Additiven wie Verstärkungsstoffen, beispielsweise Glasfasern, und/oder Nucleierungsmitteln und/oder Flammschutzmitteln und/oder Entformungsmitteln und/oder Farbstoffen und/oder Pigmenten, beispielsweise Rutil oder Ruß, und/oder Stabilisatoren gegen Hitze, UV-Strahlung und Feuchtigkeit durchgeführt werden.

Gegenstand der vorliegenden Erfindung ist somit auch das Verschäumen von thermoplastischen aromatischen Polycarbonaten mit einem Gehalt an üblichen Additiven, das dadurch gekennzeichnet ist, daß man thermoplastische, aromatische Polycarbonate nach Zusatz der üblichen Additive mit 0,01 Gew.-% bis 10 Gew.-%, vorzugsweise mit 0,1 Gew.-% bis 3 Gew.-% an $Al_2O_3(H_2O)_3$ vermischt und entweder bei Temperaturen von 220°C bis 320°C im Extruder ohne Anlegung von Vakuum zu geschäumten Formkörpern extrudiert oder bei Temperaturen von 290°C bis 330°C in Spritzgußmaschinen ohne Anlegung von Vakuum zu verschäumten Formkörper spritzgießt.

Gegenstand der vorliegenden Erfindung sind außerdem die nach diesem erfindungsgemäßen Verfahren erhältlichen, Additiv-haltigen Polycarbonatschaumstofformkörper.

Eine Erweiterung des erfindungsgemäßen Verfahrens ist noch dadurch möglich, daß den zu verschäumenden Polycarbonaten noch andere Thermoplasten zugemischt sein können, vorzugsweise thermoplastische Polyalkylenterephthalate, ABS-Polymerisate, SAN-Polymerisate und Polyolefine in Mengen bis zu 100 Gew.-%, bezogen jeweils auf Gewicht Polycarbonat.

Das Verschäumungsverfahren wird durch die Anwesenheit dieser anderen Thermoplasten nicht blockiert.

Gegenstand der vorliegenden Erfindung ist somit auch das Verschäumen von thermoplastischen aromatischen Polycarbonaten im Gemisch mit maximal gleichen Gewichtsmengen an anderen Thermoplasten, das dadurch gekennzeichnet ist, daß man die thermoplastischen aromatischen Polycarbonate im Gemisch mit maximal gleichen Gewichtsmengen an anderen Thermoplasten anmeldungsgemäß verschäumt.

Auch hierbei können die bereits erwähnten üblichen Additive mit einbezogen werden.

Gegenstand der vorliegenden Erfindung sind außerdem die nach diesem erfindungsgemäßen Verfahren erhältlichen Polycarbonatschäume, die noch andere Thermoplasten und gegebenenfalls die üblichen Additive enthalten.

Den erfindungsgemäß zu verschäumenden Polycarbonaten können noch die bekannten Schlagzähmodifikatoren wie beispielsweise hydrierte Butadien-Styrol-Copolymerisate oder Acrylatpfropfkautschuke in den üblichen Mengen, vorzugsweise in Mengen bis zu 10 Gew.-%, bezogen auf Gewicht Polycarbonat, zugesetzt sein.

Gegenstand der vorliegenden Erfindung ist somit außerdem das Verschäumen von thermoplastischen, aromatischen Polycarbonaten in all seinen bislang dargelegten Varianten, das dadurch gekennzeichnet ist, daß man den Polycarbonaten vor dem erfindungsgemäßen Verschäumen Schlagzähmodifikatoren in Mengen bis zu 10 Gew.-%, bezogen auf Gewicht Polycarbonat, zugesetzt hat.

Gegenstand der vorliegenden Erfindung sind außerdem die nach diesem Verfahren erhältlichen Polycarbonatschaumstofformkörper.

Erfindungsgemäß mitzuverwendende thermoplastische Polyalkylenterephthalate sind beispielsweise solche auf Basis von Ethylenglykol, Propandiol-1,3, Butandiol-1,4, Hexandiol-1,6 und 1,4-Bis-hydroxymethylcyclohexan. Die Molekulargewichte (Mw) dieser Polyalkylenglycolterephtalate liegen zwischen 10.000 und 80.000. Die Polyalkylenglykolterephthalate können nach bekannten Verfahren beispielsweise aus Terephthalsäuredialkylester und dem entsprechenden Diol durch Umesterung erhalten werden. Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure ums Dabei wird die Temperatur ausgehend von 140°C auf 210-220°C erhöht, Der in Freiheit gesetzte Alkohol wird abdestilliert Die Aufkondensation erfolgt anschließend bei Temperaturen von 210-280°C, der Druck wird dabei stufenweise bis auf weniger als 1 Torr erniedrigt, wobei das überschüssige Diol abdestilliert wird.

Erfindungsgemäß mitzuverwendende thermoplastische ABS-Polymerisate sind solche, in denen auf einen Kautschuk entweder ein Monomer aus der Reihe Styrol, Methylmethacrylat oder eine Monomermischung von 95-50 Gew.-% Styrol, α-Methylstyrol, Methylmethacrylat oder Mischungen daraus und 5-50 Gew.-% Acrylnitril, Methylmethacrylat, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylethers von Acryl- oder Methacrylsäure (z.B. Methylacrylat, Ethylacrylat, Methylmethacrylat und Ethylmethacrylat).

Die Pfropfmischpolymerisate enthalten 5-80 Gew.-%, insbesondere 20-70 Gew.-%, Kautschuk und 95-20 Gew.-%, insbesondere 80-30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 μm, insbesondere von 0,1 bis 1 μm, vor. Derartige Pfropfmischpolymerisate werden durch radikalische Pfropfcopolymerisation von Monomeren aus der Reihe Styrol, α-Methylstyrol, Acrylnitril, Methylmethacrylat, Maleinsäureanhydrid in Gegenwart der zu pfropfenden Kautschuke hergestellt und sind durchweg bekannte. Bevorzugte Herstellungsverfahren für solche Pfropfmischpolymerisate sind die Emulsions-, Lösungs-, Masse- oder Suspensionspolymerisation.

Erfindungsgemäß mitzuverwendende thermoplastische SAN-Polymerisate sind Copolymerisate von 95-50 Gew.-Teilen Styrol, α-Methylstyrol, Methylmethacrylat oder Mischungen daraus und 5-50 Gew.-Teilen Acrylnitril, Methacrylnitril, Methylmethacrylat oder Mischungen daraus. Unter diesen Copolymerisaten sind besonders bevorzugt Produkte aus etwa 80-60 Gew.-% Styrol, und 20-40 Gew.-% Acrylnitril, sowie die analogen Copolymerisate aus α-Methylstyrol.

Erfindungsgemäß mitzuverwendende thermoplastische Polyolefine sind Polymere von aliphatischen ungesättigten Kohlenwasserstoffen, wie beispielsweise Ethylen, Propylen, Butylen oder Isobutylen, die nach üblichen Verfahren z.B. Radikalpolymerisation erhalten werden und mittlere Gewichtsmittel oder Molekulargewichte Mw (gemessen nach gelchromatographischen Methoden) zwischen 1000 und 3.000.000 haben. Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat in bekannter Weise copolymerisiert sein.

Die Vorabmischung der einzelnen Komponenten also Polycarbonate, $Al_2O_3(H_2O)_3$, übliche Additive, andere Thermoplasten und/oder Schlagzähmodifikatoren kann in bekannter Weise bei Raumtemperatur erfolgen.

Die erfindungsgemäße Verschäumung erfolgt dann auf den üblichen Maschinen.

Die erfindungsgemäß erhältlichen Schaumstoffe können zu beliebigen Formkörpern ausgeformt oder nach der Verschäumung zurechtgeschnitten werden.

Die erfindungsgemäß erhältlichen Schaumstoff-Formkörper können vorteilhaft als Formteile zur Herstellung großflächiger Abdeckungen von Lampen, Gehäusen, Bürogeräten oder zur Herstellung großflächiger Schrankelemente, eingesetzt werden.

Beispiel 1

Man extrudiert die Mischung aus 87,5 Gew.-% Homopolycarbonat aus 2,2-Bis-(4-hydroxyphenyl)-propan Mw etwa 30 000, 10 Gew.-% Copolycarbonat aus 2,2-Bis-(4-hydroxyphenyl)-propan und 2,2-Bis-(3,5-Dibrom-4-hydroxyphenyl)-propan Polycarbonat mit einem Gehalt von 30 Gew.-% Kurzglasfaser (E-Glas), 2 % Pigment 07/394 (Mischung aus $TiO_2$ und Ruß) und 0,5 Gew.-% $Al_2O_3$ $(H_2O)_3$. Die Extrusion erfolgt auf einem Dreizonen-Einschnekkenextruder mit konstanter Gangsteigung von 1D, Schneckendurchmesser D = 37 mm, Schneckenlänge L = 25, Gangstufenverhältnis (Ausstoßzone/Einzugszone) 1:2,5. Die Temperaturen der Zonen betrugen 270°C, 250°C und 230°C. Die Verschäumung wurde ohne Kalibrierung nach dem Verfahren der freien Aufschäumung durchgeführt. Man erhielt einen feinporigen, geschlossenzelligen Schaum der Dichte 0,65 g/cm$^3$.

## Patentansprüche

1. Verfahren zum Verschäumen von thermoplatischen, aromatischen Polycarbonaten, dadurch gekennzeichnet, daß man thermoplastische aromatische Polycarbonate mit 0,01 Gew.-% bis 10 Gew.-% an $Al_2O_3(H_2O)_3$ vermischt und entweder bei Temperaturen von 220°C bis 320°C im Extruder ohne Anlegung von Vakuum zu geschäumten Formkörpern extrudiert oder bei Temperaturen von 290°C bis 330°C in Spritzgußmaschinen ohne Anlegung von Vakuum zu geschäumten Formkörpern spritzgießt.

2. Verwendung von $Al_2O_3(H_2O)_3$ zum Verschäumen von thermoplastischen, aromatischen Polycarbonaten.

3. Polycarbonatschaumstoff-Formkörper erhältlich nach dem Verfahren des Anspruchs 1.

4. Verfahren gemäß Anspruch 1, dadurch gekennzeichnet, daß man die thermoplastischen, aromatischen Polycarbonate nach Zusatz der üblichen Additive verschäumt.

5. Additiv-haltige Polycarbonatschaumstoff-Formkörper erhältlich nach dem Verfahren des Anspruchs 4.

6. Verfahren gemäß Ansprüche 1 und 4, dadurch gekennzeichnet, daß man die thermoplastischen Polycarbonate im Gemisch mit maximal gleichen Gewichtsmengen an anderen Thermoplasten verschäumt.

7. Polycarbonatschaumstoff-Formkörper, die noch andere Thermoplasten und gegebenenfalls die üblichen Additive enthalten, erhältlich nach dem Verfahren des Anspruchs 6.

8. Verfahren gemäß Ansprüche 1, 4 und 6, dadurch gekennzeichnet, daß man den Polycarbonaten vor dem Verschäumen Schlagzähmodifikatoren in Mengen bis zu 10 Gew.-%, bezogen auf Gewicht Polycarbonat, zugesetzt hat.

9. Polycarbonatschaumstoff-Formkörper erhältlich nach dem Verfahren des Anspruchs 8.

Europäisches
Patentamt

**EUROPÄISCHER RECHERCHENBERICHT**

Nummer der Anmeldung

EP    91 12 2151
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WORLD PATENTS INDEX<br>Week 7839,<br>Derwent Publications Ltd., London, GB;<br>AN 78-70233A<br>& SU-A-579 289 (UZBYTKHIMPLAST) 25. November 1977<br>* Zusammenfassung *<br>--- | 1-9 | B29C67/20<br>C08J9/00<br>//B29K69:00 |
| A | US-A-4 407 768 (R.A. GARCIA ET AL)<br>* Spalte 3, Zeile 53 - Spalte 4, Zeile 26;<br>Ansprüche 1,9,10,12-15 *<br>--- | 1,2 | |
| A | PATENT ABSTRACTS OF JAPAN<br>vol. 4, no. 65 (C-10)(547) 16. Mai 1980<br>& JP-A-55 031 871 ( FURUKAWA DENKI KOGYO K.K. )<br>6. März 1980<br>* Zusammenfassung *<br>--- | 1,2 | |
| A | WORLD PATENTS INDEX<br>Week 7721,<br>Derwent Publications Ltd., London, GB;<br>AN 77-36957Y<br>& JP-A-52 045 667 (S. KITANI) 11. April 1977<br>* Zusammenfassung *<br>--- | 1,2 | **RECHERCHIERTE SACHGEBIETE (Int. Cl.5)**<br><br>B29C<br>C08J |
| A | EP-A-0 115 162 (MOBIL OIL CORPORATION)<br>* Seite 9, Zeile 9 - Seite 10, Zeile 27 *<br>* Seite 20, Zeile 13 - Zeile 23; Ansprüche 1,5,7-15; Beispiel 1 *<br>--- | 4-9 | |
| A | US-A-4 243 575 (O.C. MEYERS ET AL)<br>* Ansprüche 15-19; Beispiel 10 *<br>--- | 4-9 | |
| A | DE-A-2 315 161 (RESEARCH PLASTICS ENGINEERING CO.)<br>* Seite 5, Zeile 1 - Zeile 7; Ansprüche 1,2,6,8 *<br>---<br><br>-/-- | 1,3-9 | |

Der vorliegende Recherchenbericht wurde für alle Patentansprüche erstellt

| Recherchenort | Abschlußdatum der Recherche | Prüfer |
|---|---|---|
| DEN HAAG | 29 APRIL 1992 | VAN NIEUWENHUIZE O. |

Europäisches
Patentamt

**EUROPÄISCHER RECHERCHENBERICHT**

Nummer der Anmeldung

EP    91 12 2151
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 400 086 (GENERAL ELECTRIC COMPANY) <br> * Seite 4, Zeile 24 - Zeile 31; Ansprüche 1-4,7 * <br><br> --- | 1,3-9 | |
| A | PATENT ABSTRACTS OF JAPAN <br> vol. 6, no. 78 (C-102)15. Mai 1982 <br> & JP-A-57 016 034 ( MITSUBISHI CHEM IND LTD ) <br> 27. Januar 1982 <br> * Zusammenfassung * <br> --- | 1,8,9 | |
| A | PATENT ABSTRACTS OF JAPAN <br> vol. 3, no. 79 (C-51)6. Juli 1979 <br> & JP-A-54 054 165 ( TEIJIN LTD ) 28. April 1979 <br> * Zusammenfassung * <br><br> ----- | 4,5 | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| DEN HAAG | 29 APRIL 1992 | VAN NIEUWENHUIZE O. |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes
      Dokument

EPO FORM 1503 03.82 (P0403)